Europäisches Patentamt

European Patent Office

Office européen des brevets

(19)

(11) Numéro de publication : **0 349 357 B1**

(12) **FASCICULE DE BREVET EUROPEEN**

(45) Date de publication du fascicule du brevet :
**11.12.91 Bulletin 91/50**

(51) Int. Cl.⁵ : **B65G 67/02, B60P 1/52**

(21) Numéro de dépôt : **89401433.1**

(22) Date de dépôt : **25.05.89**

(54) **Véhicule pour le transport de marchandises.**

(30) Priorité : **28.06.88 FR 8808675**

(43) Date de publication de la demande :
**03.01.90 Bulletin 90/01**

(45) Mention de la délivrance du brevet :
**11.12.91 Bulletin 91/50**

(84) Etats contractants désignés :
**DE GB IT**

(56) Documents cités :
**DE-A- 3 530 321**
**FR-A- 2 122 015**
**GB-A- 1 244 852**
**GB-A- 2 146 002**
**US-A- 1 495 339**
**US-A- 3 752 345**
**US-A- 4 077 532**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Geraudot, Germain**
**28 rue des Cailles**
**F-68170 Rixheim (FR)**

(74) Mandataire : **Kohn, Philippe et al**
**c/o CABINET LAVOIX 2, place d'Estienne**
**d'Orves**
**F-75441 Paris Cédex 09 (FR)**

EP 0 349 357 B1

Jouve, 18, rue Saint-Denis, 75001 PARIS

## Description

La présente invention a pour objet un véhicule pour le transport de marchandises.

Elle concerne plus particulièrement les véhicules du type comportant un châssis équipé de moyens de déplacement par rapport au sol, et au moins un chemin de roulement monté mobile par rapport au châssis entre une position basse escamotée, dans laquelle les marchandises reposent sur le châssis, et une position haute sortie, dans laquelle les marchandises reposent sur les éléments de roulement du chemin de roulement, et des moyens de commande des déplacements verticaux du chemin de roulement.

Ce type de véhicule est utilisé pour transporter des marchandises circulant sur des chemins de roulement et les acheminer vers d'autres lieux, par exemple à l'intérieur d'un même atelier ou même vers un autre atelier ou encore vers un magasin de stockage. Pendant la phase de transport les marchandises reposent sur un plancher fixe par rapport au châssis.

Ce type de véhicule est plus particulièrement approprié pour le transport de charges palettisées, de caisses, de cadres, de conteneurs et plus généralement de tout objet reposant sur son support par l'intermédiaire d'un fond plat ou d'une base permettant la circulation sur un ou plusieurs chemins de roulement constitués par exemple par des pistes à rouleaux, par des billes, ou par tout autre moyen de déplacement horizontal d'une charge par rapport à un support.

On a déjà proposé, par exemple dans le document FR-A-2.573.372, de commander les déplacements verticaux du chemin de roulement par rapport au châssis au moyen d'un boudin creux déformable relié à une source d'air comprimé et qui est interposé entre une partie fixe du châssis et le chemin de roulement.

Outre le fait que ce type de dispositif nécessite de prévoir une source d'énergie, embarquée ou autonome, pour assurer le gonflement des boudins, il a également pour inconvénient d'être de conception complexe et de ne pas permettre d'assurer de manière fiable un niveau constant de l'assiette du chemin de roulement par rapport au sol et notamment par rapport à un quai sur lequel on désire décharger les marchandises.

Afin de remédier à ces inconvénients, l'invention propose un véhicule pour le transport de marchandises du type mentionné plus haut caractérisé en ce que les moyens de commande des déplacements verticaux du chemin de roulement comportent au moins une jambe verticale de poussée reliée au chemin de roulement et qui est susceptible de coopérer avec des moyens en forme de came rectiligne reliés au sol pour provoquer le déplacement du chemin de roulement vers sa position haute.

Selon d'autres caractéristiques de l'invention :

— la jambe de poussée coopère par son extrémité inférieure avec lesdits moyens formant came ;

— l'extrémité inférieure de la jambe de poussée est située à une distance prédéterminée du sol lorsque le chemin de roulement est en position basse, et les moyens formant came sont constitués par une piste rectiligne s'étendant parallèlement au sol à une altitude supérieure à la distance prédéterminée et dont au moins une extrémité se termine par une rampe ;

— le véhicule peut comporter plusieurs chemins de roulement reliés entre eux pour constituer un plateau rectangulaire de roulement monté mobile verticalement par rapport au châssis, le plateau comportant quatre jambes de poussée fixées par paires le long de deux côtés opposés du plateau, les moyens formant came comportant une paire de pistes rectilignes parallèles dont chacune coopère avec une des paires de jambes de poussée ;

— dans le cas où le véhicule est une plateforme dont les moyens de déplacement du châssis par rapport au sol sont constitués par deux trains de roues de voies égales, les pistes s'étendent parallèlement l'une à l'autre à une distance supérieure à la voie commune ;

— chaque jambe de poussée coopère avec les moyens formant came par l'intermédiaire d'un moyen de roulement ou de glissement tel qu'un galet dont l'axe peut être agencé parallèle aux axes des trains de roues ;

— il peut également être prévu des moyens de guidage transversal des déplacements du véhicule par rapport au sol disposés entre les faces latérales de chacune des pistes et les joues latérales externes en vis-à-vis des roues.

D'autres caractéristiques et avantages de l'invention apparaîtront à la lecture de la description détaillée qui va suivre pour la compréhension de laquelle on se reportera aux dessins annexés dans lesquels :

— La figure 1 est une vue latérale d'une plateforme de transport de marchandises réalisée conformément aux inventions et dans laquelle les chemins de roulement sont en position basse ;

— la figure 2 est une vue latérale de gauche de la plateforme de la figure 1 ;

— la figure 3 est une vue similaire à celle de la figure 1 dans laquelle les chemins de roulement sont en position haute ; et

— la figure 4 est une vue latérale de gauche de la plateforme de la figure 3.

On a représenté aux figures une plateforme 10 qui comporte un châssis 12 équipé de deux trains de roue 14 et 16 qui permettent le déplacement de la plateforme par rapport au sol 18 par exemple par traction de cette dernière à l'aide d'un timon 20.

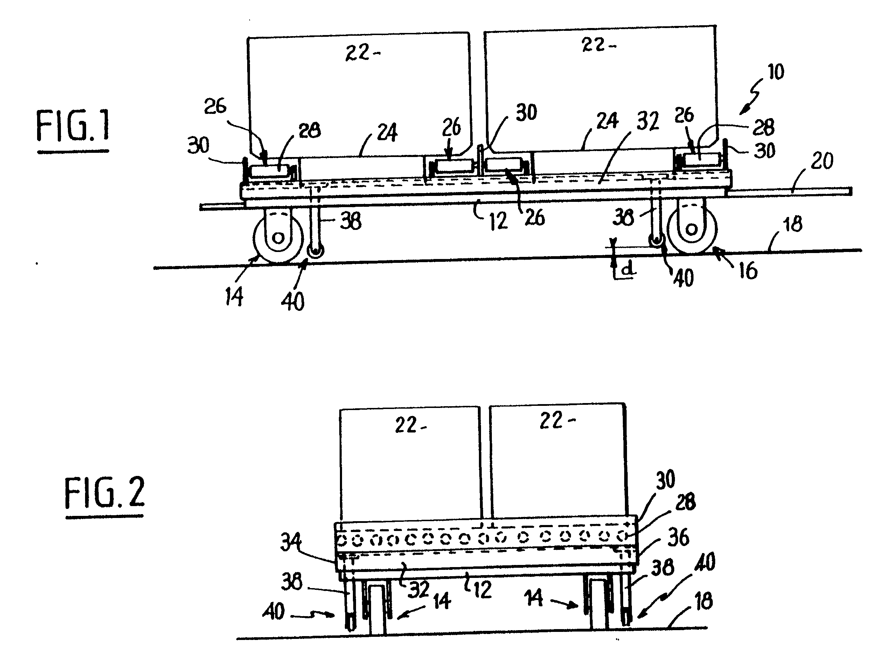

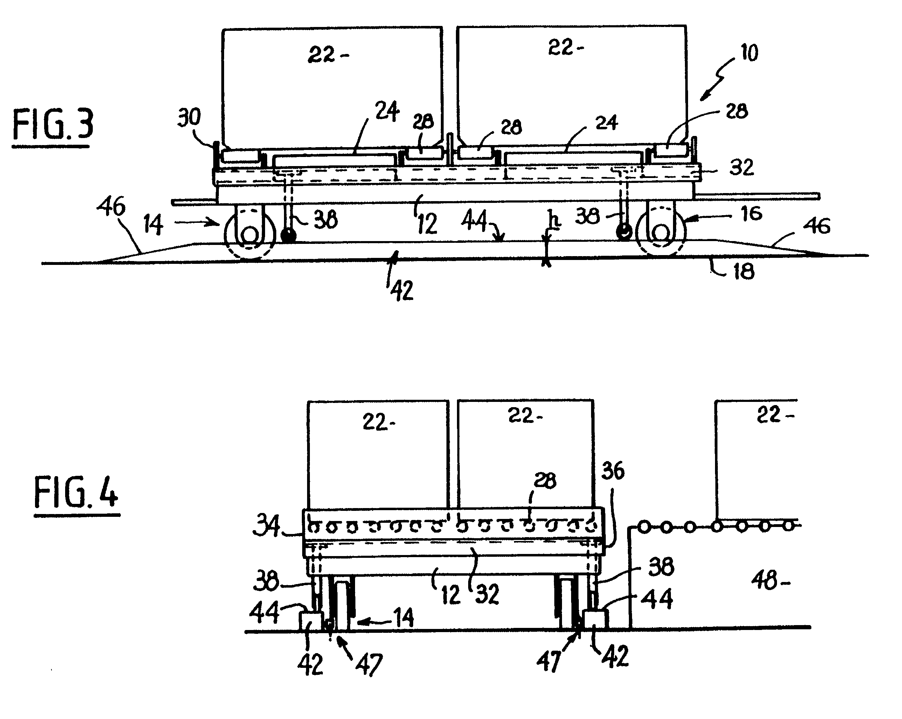

Comme on peut le constater aux figures 2 et 4, les deux trains de roue ont la même voie.

La plateforme 10 permet le transport de marchandises 22 qui sont ici représentées sous la forme de deux colis parallélépipédiques qui reposent par leurs faces inférieures sur deux portions de plancher 24 qui sont fixes par rapport au châssis 12 de la plateforme.

Afin de permettre un déplacement horizontal des colis 22 par rapport à la plateforme 12 en vue de procéder à leur déchargement, la plateforme 10 est équipée de chemins de roulement 26.

Dans le mode de réalisation représenté les quatre chemins de roulement sont chacun constitués par une suite de rouleaux 28 montés tournants dans un cadre 30 de façon à permettre un déplacement par roulement de chacun des colis 22 selon une direction perpendiculaire à l'axe longitudinal de la plateforme 10.

Chacun des cadres 30 des chemins de roulement est fixé à un plateau mobile 32.

Conformément à l'invention le plateau mobile 32 est susceptible de se déplacer verticalement par rapport au châssis 12 de la plateforme entre sa position basse escamotée représentée aux figures 1 et 2 et sa position haute sortie représentée aux figures 3 et 4.

Dans sa position basse représentée aux figures 1 et 2 les rouleaux 28 des chemins de roulement 26 sont escamotés, c'est-à-dire qu'il existe un jeu entre la génératrice extérieure de chacun des rouleaux 28 et la face inférieure des colis 22.

Dans sa position haute représentée aux figures 3 et 4, le plateau 32 s'est déplacé vers le haut par rapport à la position qu'il occupe aux figures 1 et 2 de manière à ce que les colis 22 reposent sur les génératrices extérieures des rouleaux 28 des chemins de roulement 26 et ne soient donc plus en contact avec les portions 24 du plancher fixe de la plateforme 10.

Conformément à l'invention, chacun des côtés latéraux 34 et 36 du plateau mobile de roulement 32 est équipé d'une paire de jambes de poussée 38.

Chaque jambe de poussée 38 est constituée par un pied métallique qui s'étend verticalement selon une direction sensiblement perpendiculaire au plan général du plateau 32. L'extrémité supérieure de chaque jambe de poussée 38 est fixée au plateau 32 et son extrémité inférieure est munie d'un galet de roulement 40 dont l'axe est parallèle à ceux des deux trains de roue 14 et 16.

Lorsque le plateau 32 est en position basse, la génératrice du galet 40 est située à une distance prédéterminée $\underline{d}$ du sol 18 de manière à ce que, durant les phases de transport de marchandises, les jambes de poussée 38 n'interfèrent pas avec la surface du sol 18.

Conformément à l'invention, et afin de provoquer le passage du plateau 32 en position haute, les galets 40 des jambes de poussée 38 coopèrent avec des moyens en forme de came rectiligne 42.

Dans le mode de réalisation représenté aux figures 3 et 4, les moyens 42 sont constitués par deux pistes rectilignes planes 44 qui s'étendent dans un plan parallèle à la surface du sol 18 à une altitude $\underline{h}$ supérieure à la distance $\underline{d}$.

Chacune des pistes 44 est munie, à ses extrémités, de deux rampes 46 qui rejoignent en pente douce la surface du sol 18.

Comme on peut le constater à la figure 4, les pistes rectilignes parallèles 42 sont espacées transversalement l'une de l'autre d'une distance supérieure à la voie des deux trains de roues 14 et 16 afin de permettre le passage de ces dernières entre les cames 42 dont l'écartement est égal à l'écartement transversal des deux paires de jambes de poussée 38.

Selon un autre aspect de l'invention, les cames 42 permettent également de guider latéralement les déplacements de la plateforme 10 pour limiter les frottements et provoquer son recentrage entre les faces latérales en vis-à-vis des deux cames 42. A cet effet des moyens de coulissement, tels que des roulettes, patins, billes ou autres dispositifs 47 sont disposés entre les faces latérales des pistes 42 et les joues latérales externes en vis-à-vis des roues 14 et 16.

La plateforme de transport et de déchargement de marchandises représentée aux figures fonctionne de la manière suivante.

En phase de transport, les colis 22 reposent sur le plancher 24 et ne risquent donc pas de bouger par rapport à celui-ci qui peut être équipé de moyens antiglissement.

Lorsque l'on désire procéder au déchargement des colis 22, on fait progresser la plateforme entre deux cames rectilignes 42 ce qui provoque successivement la montée des différentes jambes de poussée 38 sur les pistes supérieures 44 dont l'altitude $\underline{h}$ est suffisante pour permettre le soulèvement des colis 22 par les rouleaux 48 au-dessus du plancher 24.

Dans cette position représentée aux figures 3 et 4 il est possible de déplacer horizontalement les colis 22 de manière très aisée, en provoquant leur roulement sur les rouleaux 28, pour les décharger sur un quai de déchargement 48 lui-même équipé de chemins de roulement.

Le choix et la dimension de la plateforme sont déterminés en fonction de la dimension des marchandises à transporter ainsi qu'en fonction de l'encombrement acceptable pour permettre la circulation en site des plateformes.

A titre de variante, et sans sortir du cadre de l'invention, la plateforme peut être déplacée manuellement d'un poste à l'autre ou attelée à l'aide du timon 20 afin de constituer un train de une ou plusieurs plateformes tirées par un véhicule tracteur.

Le véhicule tracteur peut être un tracteur automoteur automatique qui se déplace selon un circuit préétabli.

La plateforme peut également être du type automotrice et automatique, et décrire un circuit préalablement défini à la façon des systèmes actuellement connus sous l'appellation de "tracteurs automoteurs filoguidés".

A la place des trains de roues 14 et 16 la plateforme peut être équipée de coussins d'air, de patins, et être entraînée par chaînes et groupes motoréducteurs fixés au sol.

Dans le cas où le déplacement des marchandises, au poste de prise ou de dépose, doit s'effectuer à une altitude différente de celle du plateau 32, on peut réaliser le changement d'altitude au moyen d'un système d'ascenseur-descenseur équipé des mêmes chemins de roulement.

Grâce à une conception de véhicule de transport et de déchargement de marchandises selon l'invention, on constate que les déplacements verticaux de la structure mobile s'effectuent mécaniquement par l'action des jambes de poussée sur les pistes 44 et sans apport d'énergie autre que celle nécessaire au déplacement des véhicules.

En cours de transport les marchandises sont transportées en toute sécurité car elles reposent sur le plancher 24 et il n'est donc pas nécessaire de verrouiller les marchandises en position sur la plateforme pour le transport.

On constate également que le niveau de déchargement, c'est-à-dire en position haute sortie, du plateau 32 est constant par rapport à un quai 48 et ceci quelles que soient les variations de l'assiette du châssis 12 de la remorque 10 car le niveau du plateau 32 ne dépend que de l'altitude des pistes 44 qui sont elles-mêmes fixes par rapport au sol.

On constate enfin, qu'en phase de déchargement, les efforts dûs au poids des colis 22 sont repris directement par les jambes de poussée 38.

## Revendications

1. Véhicule (10) pour le transport de marchandises (22) du type comportant un châssis (12-24) équipé de moyens de déplacement (14, 16) par rapport au sol (18), et au moins un chemin de roulement (26) monté mobile par rapport au châssis entre une position basse escamotée, dans laquelle les marchandises (22) reposent sur le châssis (12-24), et une position haute sortie, dans laquelle les marchandises (22) reposent sur les éléments de roulement (28) dudit chemin de roulement (26), et des moyens de commande des déplacements verticaux du chemin de roulement, caractérisé en ce que lesdits moyens de commande comportent au moins une jambe verticale de poussée (38) reliée au chemin de roulement (26) et qui est susceptible de coopérer avec des moyens en forme de came rectiligne (42) reliés au sol pour provoquer le déplacement du chemin de roulement (26) vers sa position haute.

2. Véhicule selon la revendication 1 caractérisé en ce que la jambe de poussée (38) coopère par son extrémité inférieure (40) avec lesdits moyens formant came (42).

3. Véhicule selon la revendication 2 caractérisé en ce que ladite extrémité inférieure (40) est située à une distance prédéterminée (d) du sol (18) lorsque le chemin de roulement (26) est en position basse, et en ce que lesdits moyens formant came (42) sont constitués par une piste rectiligne (44) s'étendant parallèlement au sol (18) à une altitude (h) supérieure à ladite distance prédéterminée (d) et dont au moins une extrémité se termine par une rampe (46).

4. Véhicule selon la revendication 3 caractérisé en ce qu'il comporte plusieurs chemins de roulement (26) reliés entre eux pour constituer un plateau rectangulaire de roulement (32) monté mobile verticalement par rapport au châssis (12), en ce que le plateau (32) comporte quatre jambes de poussée (38) fixées par paires le long de deux côtés opposés (34, 36) du plateau (32), et en ce que lesdits moyens formant came comprennent une paire de pistes parallèles (44) dont chacune coopère avec une desdites paires de jambes de poussée.

5. Véhicule selon la revendication 4, caractérisé en ce que les moyens de déplacement du châssis par rapport au sol comprennent deux trains de roues (14, 16) de voies égales, et en ce que lesdites pistes (44) s'étendent parallèlement l'une à l'autre à une distance supérieure à ladite voie.

6. Véhicule selon l'une quelconque des revendications précédentes caractérisé en ce que chaque jambe de poussée (38) coopère avec lesdits moyens formant came à l'aide d'un moyen de glissement ou de roulement (40).

7. Véhicule selon la revendication 6 prise en combinaison avec la revendication 5 caractérisé en ce que lesdits moyens de roulement comportent un galet (40) dont l'axe est parallèle aux axes desdits trains de roues (14, 16).

8. Véhicule selon l'une quelconque des revendications 5 à 7 caractérisé en ce qu'il est prévu des moyens (47) de guidage transversal des déplacements du véhicule disposés entre les faces latérales de chacune des pistes (44) et les joues des roues en vis-à-vis de ces faces latérales.

## Patentansprüche

1. Fahrzeug (10) zum Transport von Waren der Sorte, die ein Fahrgestell (12-24), das mit einer Bewegungsvorrichtung (14, 16) bezüglich des Bodens (18) ausgestattet ist, wenigstens einen Rollweg (26), der bezüglich des Fahrgestells zwischen einer niedrigen, eingefahrenen Position, in der die Waren (22) auf dem Fahrgestell (12-24) ruhen, und einer hohen, ausgefahrenen Position, in der die Waren (22) auf den Rollelementen (28) des Rollweges (26) ruhen, beweglich montiert ist, und Steuerungsvorrichtungen für die vertikalen Bewegungen des Rollwegs umfassen, dadurch gekennzeichnet, daß die Steuerungsvorrichtungen wenigstens ein vertikales Stoßbein (38) umfassen, das mit dem Rollweg (26) verbunden ist und das geeignet ist, mit Vorrichtungen in der Form eines geradlinigen Exzenters (42), die mit dem Boden verbunden sind, zusammenzuwirken, um die Bewegung des Rollweges (26) in seine hohe Stellung zu bewirken.

2. Fahrzeug nach Anspruch 1, dadurch gekennzeichnet, daß das Stoßbein (38) mit seinem unteren Ende (40) mit den den Exzenter (42) bildenden Vorrichtungen zusammenwirkt.

3. Fahrzeug nach Anspruch 2, dadurch gekennzeichnet, daß sich das untere Ende (40) in einem vorgegebenen Abstand (d) vom Boden (18) befindet, wenn der Rollweg (26) in der niedrigen Position ist, und daß die den Exzenter (42) bildenden Vorrichtungen aus einer geradlinigen Piste (44) bestehen, die sich parallel zum Boden (18) in einer Höhe (h) größer als der vorgegebene bestand (d) erstreckt und von der wenigstens ein Ende in einer Rampe (46) endet.

4. Fahrzeug nach Anspruch 3, dadurch gekennzeichnet, daß es mehrere Rollwege (26) umfaßt, die untereinander verbunden sind, um eine rechtwinklige Rollplatte (32) zu bilden, die vertikal beweglich bezüglich des Fahrgestells (12) montiert ist, und daß die Platte (32) vier Stoßbeine (38) umfaßt, die paarweise entlang zwei gegenüberliegender Seiten (34, 36) der Platte (32) montiert sind, und daß die den Exzenter bildenden Vorrichtungen ein Paar von parallelen Pisten (44) umfassen, von denen jede mit den Paaren von Stoßbeinen zusammenwirkt.

5. Fahrzeug nach Anspruch 4, dadurch gekennzeichnet, daß die Bewegungsvorrichtungen für das Fahrgestell bezüglich des Bodens zwei Radzüge (14, 16) mit gleichen Spuren umfassen und daß die Pisten (44) sich parallel zueinander und mit einem größeren Abstand als die Spur erstrecken.

6. Fahrzeug nach einem der vorhergehenden Ansprüche, dadurch gekennzeichnet, daß jedes Stoßbein (38) mit den den Exzenter bildenden Vorrichtungen mittels einer Gleit- oder Rollvorrichtung (40) zusammenwirkt.

7. Fahrzeug nach Anspruch 6 zusammen mit Anspruch 5, dadurch gekennzeichnet, daß die Rollvorrichtungen eine Rolle (40) umfassen, deren Achse parallel zu den Achsen der Radzüge (14, 16) ist.

8. Fahrzeug nach einen der Ansprüche 5 bis 7, dadurch gekennzeichnet, daß Vorrichtungen (47) zur transversalen Führung des Fahrzeugs vorgesehen sind, die zwischen den seitlichen Seinen jeder der Pisten (44) und den Radwangen gegenüber diesen seitlichen Seiten angeordnet sind.

## Claims

1. Vehicle (10) for the transport of goods (22) of the type having a chassis (12-24) fitted with means of movement (14, 16) with respect to the ground (18), and at least one runway (26) mounted so as to be movable with respect to the chassis between a lower retracted position, in which the goods (22) rest on the chassis (12-24), and an upper extended position, in which the goods (22) rest on the running elements (28) of the said runway (26), and means for controlling the vertical movements of the runway, characterised in that the said means of control incorporate at least one vertical thrust leg (38) connected to the runway (26) and which is capable of interacting with means in the form of a rectilinear cam (42) connected to the ground in order to bring about the movement of the runway (26) to its upper position.

2. Vehicle according to claim 1 characterised in that the thrust leg (38) interacts through its bottom end (40) with the said means forming a cam (42).

3. Vehicle according to claim 2 characterised in that the said bottom end (40) is situated at a predetermined distance (d) from the ground (18) when the runway (26) is in its lower position, and in that the said means forming a cam (42) consist of a rectilinear track (44) running parallel to the ground (18) at a height (h) greater than the said predetermined distance (d) and at least one end of which terminates in a ramp (46).

4. Vehicle according to claim 3 characterised in that it has several runways (26) connected to each other to constitute a rectangular travelling bed (32) mounted so as to be movable vertically with respect to the chassis (12), in that the bed (32) has four thrust legs (38) fixed in pairs along two opposite sides (34, 36) of the bed (32), and in that the said means forming a cam comprise a pair of parallel tracks (44), each of which interacts with one of the said pairs of thrust legs.

5. Vehicle according to claim 4, characterised in that the means of moving the chassis with respect to the ground comprise two sets of wheels (14, 16) of equal gauge, and in that the said tracks (44) run parallel to each other at a distance greater than the said gauge.

6. Vehicle according to any one of the preceding claims characterised in that each thrust leg (38) interacts with the said means forming a cam by means of a sliding or running means (40).

7. Vehicle according to claim 6 taken in combination with claim 5 characterised in that the said running means incorporate a roller (40) whose axis is parallel to the axes of the said sets of wheels (14, 16).

8. Vehicle according to any one of claims 5 to 7 characterised in that means (47) for the transverse guiding of the movements of the vehicle are provided, disposed between the lateral faces of each of the tracks (44) and the cheeks of the wheels opposite these lateral faces.

FIG.1

FIG.2

EP 0 349 357 B1

FIG.3

FIG.4